# EUROPÄISCHE PATENTSCHRIFT

(11) **EP 2 318 806 B1**
(45) Veröffentlichungstag und Bekanntmachung des Hinweises auf die Patenterteilung: **05.09.2012**
(21) Anmeldenummer: 09777273.5
(22) Anmeldetag: 17.07.2009
(51) Int. Cl.: G01C 19/72

(54) **FASEROPTISCHES INTERFEROMETER UND VERFAHREN ZUR BESTIMMUNG PHYSIKALISCHER ZUSTANDSGRÖßEN IM INNERN EINER FASERSPULE EINES FASEROPTISCHEN INTERFEROMETERS**
FIBER OPTIC INTERFEROMETER AND METHOD FOR DETERMINING PHYSICAL STATE PARAMETERS IN THE INTERIOR OF A FIBER COIL OF A FIBER OPTIC INTERFEROMETER
INTERFÉROMÈTRE À FIBRE OPTIQUE ET PROCÉDÉ DE DÉTERMINATION DE VARIABLES D'ÉTAT PHYSIQUES À L'INTÉRIEUR D'UNE BOBINE DE FIBRE D'UN INTERFÉROMÈTRE À FIBRE OPTIQUE

(30) Priorität: 28.08.2008 DE 102008044810
(43) Veröffentlichungstag der Anmeldung: 11.05.2011
(73) Patentinhaber: Northrop Grumman LITEF GmbH, 79115 Freiburg (DE)
(72) Erfinder: DORNER, Georg, 79189 Bad Krozingen (DE)
(74) Vertreter: Müller - Hoffmann & Partner
(86) Internationale Anmeldenummer: PCT/EP2009/005219
(87) Internationale Veröffentlichungsnummer: WO 2010/022822

(56) Entgegenhaltungen:
- EP-A2- 0 987 518
- EP-A2- 1 790 943
- WO-A1-99/38048
- WO-A2-2008/089208
- WO-A2-2008/157405
- DE-C1- 10 037 501
- US-A1- 2002 180 978

## Beschreibung

Die Erfindung betrifft einen Drehrafensensor mit einem faseroptischen Interferometer mit einer zu einer Faserspule aufgewickelten Lichtleitfaser, in die zwei Teillichtstrahlen einer ersten Lichtquelle einkoppelbar sind. Die Erfindung betrifft ferner ein Verfahren zur Ermittlung der Drehrate und physikalischer Zustandsgrößen im Innern einer Faserspule eines faseroptischen Interferometers, bei dem zwei Teillichtstrahlen in eine zur Faserspule aufgewickelte Lichtleitfaser eingekoppelt werden.

Faseroptische Interferometer mit Bragg-Strukturen in der Lichtleitfaser zur Ermittlung physikalischer Größen (z.B. Rotation, Bewegung oder Druck) sind aus der WO-A2-2008/003071 und der WO-A2-2008/157405 bekannt. Die EP-A2-0 987 518 beschreibt einen faseroptischen Kreisel mit geschlossener Regelschleife und Kompensation des Shupe-Effekts. Die WO-A2-2008/089208 offenbart faseroptische Druck- und Temperatursensoren mit Bragg-Strukturen in der Lichtleitfaser.

Faseroptische Interferometer werden beispielsweise dazu verwendet, Drehgeschwindigkeiten zu messen. Dazu wird ein Lichtstrahl in zwei Teilstrahlen aufgeteilt, die jeweils in entgegengesetzter Richtung im Kreis geführt werden und nach einem bzw. mehreren Umläufen wieder aufeinander treffen. Das Interferenzmuster der beiden überlagerten Teilstrahlen verändert sich, wenn das faseroptische Interferometer um eine Achse senkrecht zur Strahlebene gedreht wird, da der optische Weg für beide Teilstrahlen dann nicht mehr gleich lang ist. Das sich ergebende Interferenzmuster der beiden sich überlagernden Strahlen ist jedoch nicht nur eine Funktion der Drehgeschwindigkeit, sondern kann auch von äußeren Parametern wie beispielsweise der Temperatur abhängen. Da faseroptische Interferometer heute weltweit in den unterschiedlichsten Anwendungsbereichen eingesetzt werden, müssen sie unter anspruchsvollen Bedingungen wie beispielsweise über einen Temperaturbereich von -55°C bis 90°C ein konstantes Betriebsverhalten aufweisen. Dies ist nur möglich, indem die einzelnen Sensoren über den operativ geforderten Temperaturbereich kalibriert werden. Bei der Kalibrierung werden die Ausgangssignale des faseroptischen Interferometers, die eine Funktion der Phasenverschiebung der beiden gegensinnig laufenden Lichtstrahlen sind, unter hinreichend bekannten äußeren Parametern erfaßt. Anschließend wird ein geeignetes mathematisches Modell abhängig von einer Eingangsgröße, zum Beispiel der aktuell herrschenden Umgebungstemperatur, ermittelt und in einem Speicher der Signalverarbeitung des faseroptischen Interferometers abgelegt. Während des Betriebs des faseroptischen Interferometers werden dann die gemessenen Daten abhängig von dieser Eingangsgröße ausgewertet.

Dies kann jedoch nur eine Näherung darstellen, da die Eigenschaften des faseroptischen Interferometers nicht nur von einer einzigen Eingangsgröße wie der Temperatur abhängen, sondern vielmehr von einer Vielzahl von Parametern, die (in erster Näherung) physikalisch unabhängig voneinander sind oder miteinander wechselwirken, wie zum Beispiel Temperatur und Dehnung aufgrund einer temperaturbedingten Längenänderung der Faser. Auch hängen die Eigenschaften des faseroptischen Interferometers von zeitlichen Verläufen der Temperatur am gleichen Ort, i.e. den Temperaturtransienten, oder auch den unterschiedlichen Temperaturen an verschiedenen Orten zur gleichen Zeit, i.e. den Temperaturgradienten, ab. Am Beispiel der Temperatur kann dies auf einfache Weise näher erläutert werden: die Laufzeit des Lichts im Kern der Lichtleitfaser ist abhängig von der Länge der Lichtleitfaser, die sich aufgrund von Materialausdehnung mit zunehmender Temperatur ändert. Sie ist jedoch auch abhängig vom Brechungsindex n innerhalb der Lichtleitfaser. Der Brechungsindex wiederum hängt sowohl direkt von der Temperatur ab aufgrund der Materialeigenschaft der Faser, als auch indirekt von der Temperatur, da eine durch die Änderung der Temperatur bedingte Längenänderung der Faser mit variierenden, räumlich lokal verteilten mechanischen Spannungen σ im inneren Faserkern der aufgewickelten Faser einhergeht und damit zu einem veränderten Brechungsindex n führen kann. Bei Verstärkung der lokalen mechanischen Spannungen auf die Faser kann es auch zu Kreuzkopplungen zwischen der schnellen und der langsamen Achse einer polarisationserhaltenden optischen Faser kommen, was sich ebenfalls in erheblichen Laufzeitänderungen auswirken kann.

Für eine genaue Kalibrierung des faseroptischen Interferometers ist es deshalb wünschenswert, unter Verwendung herkömmlicher Messmethoden einen messtechnischen Zugang zu den Zustandsgrößen im Innern der Lichtleitfaser zu erhalten.

Eine dem Betrieb des Sensors vorausgehende Kalibrierung hat außerdem den Nachteil, dass vorab festgelegt werden muss, unter welchen Bedingungen der Sensor eingesetzt werden soll. Die Kalibrierung ist dann auch nur unter diesen vorab definierten Bedingungen gültig.

Um das temperaturabhängige Verhalten eines faseroptischen Interferometers zu bestimmen, ist es aus dem Stand der Technik bekannt, einen oder mehrere Temperatursensoren, die meistens auf Halbleitern basieren, einzeln oder gleichzeitig im Verbund einzusetzen. Diese werden häufig in der Nähe des Interferometers oder des Phasenmodulators angeordnet, oder auch direkt auf der obersten Lage der zu einer Spule aufgewickelten Lichtleitfasern. Bei einer derartigen Anordnung gelingt es jedoch nicht, den momentanen Zustand direkt im Innern der Lichtleitfaser selbst zu messen. So ist die gemessene Temperatur nicht unbedingt die Temperatur im Innern der Lichtleitfaser, da aufgrund der unterschiedlichen Wärmekapazitäten der eingesetzten Materialien im faseroptischen Interferometer sich komplexe Verhältnisse des Wärmetransports von der Umgebung der Faser bis ins Innere der Faser ergeben. Eine äußere Änderung der Umgebungstemperatur wird sich erst einige Zeit später im Innern der Lichtleitfaser auswirken, wobei diese Zeit von vielen, meist unbekannten Größen zeitlich und räumlich abhängig ist und folglich nur näherungsweise bestimmt werden kann. Hinzu kommt, dass eine gleiche Temperatur nicht unbedingt die gleiche Laufzeit des Lichtstrahls zur Folge hat, da sich beispielsweise durch Hystereseeffekte, wenn sich eine bestimmte Temperatur nach einem Abkühl- bzw. Aufheizvorgang einstellt, bei gleichen Temperaturverhältnissen andere innere Zustände am Kern der Lichtleitfaser einstellen können. In diesem Fall liegt dann die gleiche gemessene Temperatur vor und es wird in beiden Fällen in gleichem Maß kompensiert, auch wenn die tatsächlichen Laufzeiten der Lichtstrahlen unterschiedlich sind.

Eine denkbare Methode, um diese Nachteile zu beheben, wäre beispielsweise herkömmliche Halbleitertemperatursensoren und/oder Drucksensoren zusammen mit der Lichtleitfaser zur Faserspule aufzuwickeln. Bei dieser Methode würden sich jedoch verfahrenstechnische Schwierigkeiten beim Aufwickeln der Lichtleitfaser ergeben, wie beispielsweise ein Abspringen der Lichtleiterfaser durch entstehende Ausbuchtungen innerhalb der Spule an den Orten der Sensoren. Die Sensoren innerhalb der Spule könnten außerdem zu lokalen Änderungen mechanischer Spannungen in den darunter bzw. darüber gewickelten Lichtleitfasern führen, was wiederum wegen des Einflusses der mechanischen Spannungen auf den Brechungsindex des Faserkernmaterials einen Einfluss auf das Verhalten der Lichtlaufzeiten hätte.

Durch die vorliegende Erfindung wird ein faseroptisches Interferometer bereitgestellt, bei dem auf einfache Weise und unter Ausnützung bekannter Messmethoden Informationen über physikalische Zustandsgrößen im Innern der Faserspule des Interferometers gewonnen werden können.

Bei dem erfindungsgemäßen faseroptischen Interferometer ist eine in die Faserspule integrierte Bragg-Struktur vorgesehen, die eine Lichtleitfaser mit periodisch variierendem Brechungsindex umfasst. Die Reflektionswellenlänge einer Bragg-Struktur ist eine Funktion der Gitterperiode der Struktur, die sich mit der Temperatur und der Dehnung der Faser verändert. Da die Bragg-Struktur in die Faserspule integriert ist, können bei dem erfindungsgemäßen Interferometer durch Messung der Reflektionswellenlänge der Bragg-Struktur unmittelbar Informationen über physikalische Zustandsgrößen direkt im Innern der Faserspule gewonnen werden. Auf diese Weise können durch Temperatur- und/oder Änderung mechanischer Spannungen bedingte Laufzeitunterschiede der beiden gegensinnig laufenden Teillichtstrahlen genau kompensiert werden.

Die vorliegende Erfindung stellt ferner ein Verfahren bereit, mittels dem auf einfache Weise und unter Ausnutzung bekannter Messmethoden physikalische Zustandsgrößen im Innern der Faser einer Faserspule des faseroptischen Interferometers gewonnen werden können.

Bei dem erfindungsgemäßen Verfahren werden anhand der Reflektionswellenlänge einer in die Faserspule integrierten Bragg-Struktur, die eine Lichtleitfaser mit periodisch variierendem Brechungsindex umfasst, Informationen über physikalische Zustandsgrößen im Innern der Faserspule gewonnen. Eventuelle Änderungen der Temperatur und/oder mechanischen Spannung der Faser lassen sich durch die Integration der Bragg-Struktur in die Faserspule des faseroptischen Interferometers an der Stelle ermitteln, an der es aufgrund dieser Änderungen zu relativen Laufzeitverschiebungen der beiden gegensinnig laufenden Teillichtstrahlen kommen kann.

Weitere Einzelheiten, Merkmale und Vorteile der Erfindung ergeben sich aus der nachfolgenden Beschreibung zweier bevorzugter Ausführungsbeispiele der Erfindung anhand der Zeichnungen. In diesen zeigen:
Fig. 1 in schematischer Weise ein erfindungsgemäßes faseroptisches Interferometer mit einer Anordnung zur Ermittlung physikalischer Zustandsgrößen im Innern der Faserspule gemäß einer ersten bevorzugten Ausführungsform,
Fig. 2 in schematischer Weise ein erfindungsgemäßes faseroptisches Interferometer gemäß einer zweiten bevorzugten Ausführungsform, und
Fig. 3 in schematischer Weise eine eine Lichtleitfaser mit periodisch variierendem Brechungsindex umfassende Bragg-Struktur.

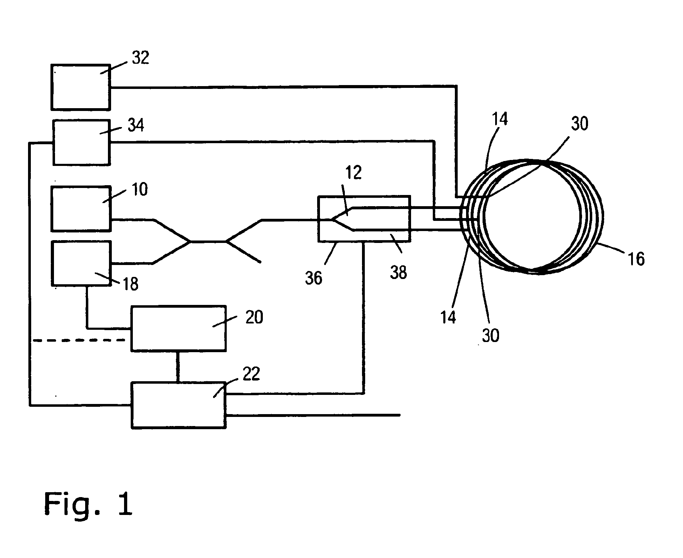

Bei dem in der Fig. 1 gezeigten faseroptischen Interferometer handelt es sich um ein sogenanntes Sagnac-Interferometer, mittels dem eine auf die Anordnung wirkende Rotationsgeschwindigkeit ermittelt werden kann. Das faseroptische Interferometer weist eine erste Lichtquelle 10 auf, deren Lichtstrahl an einen Koppler 12 geleitet wird, der je nach der Richtung, in den ihn ein Lichtstrahl durchläuft, als Strahlteiler und als Koppler wirken kann. Im Koppler 12 wird der von der ersten Lichtquelle 10 kommende Lichtstrahl in zwei Teillichtstrahlen aufgeteilt, die jeweils in entgegengesetzten Richtungen in eine Lichtleitfaser 14 des faseroptischen Interferometers eingestrahlt werden. Die Lichtleitfaser 14 des faseroptischen Interferometers ist (auf einem hier nicht abgebildeten) Träger zu einer Faserspule 16 aufgewickelt. Die zwei gegensinnig laufenden Teillichtstrahlen werden nach Durchlaufen der Lichtleitfaser 14 im Koppler 12 wieder zu einem Lichtstrahl vereinigt. Der durch Überlagerung der beiden Teillichtstrahlen entstandene Lichtstrahl wird an einen ersten Photodetektor 18 geleitet, dessen Ausgangssignal ein Maß für die Lichtintensität des auf den Photodetektor 18 auftreffenden Lichtstrahls ist. Das Ausgangssignal des Photodetektors 18 wird an eine Signalverarbeitungseinrichtung 20, 22 des faseroptischen Interferometers weitergeleitet. Die Signalverarbeitungseinrichtung 20, 22 weist eine analoge Einheit 20 und eine digitale Einheit 22 auf.

Mit dem beschriebenen Aufbau lassen sich in bekannter Weise Drehgeschwindigkeiten bestimmen. Durch Drehung der Faserspule 16 um eine Achse senkrecht zur Strahlebene ergeben sich unterschiedliche Laufzeiten für die beiden die Lichtleitfaser 14 gegensinnig durchlaufenden Teillichtstrahlen. Die unterschiedlichen Laufzeiten resultieren in einer Phasenverschiebung der beiden Teillichtstrahlen zueinander am Ausgang der Faserspule 16, wobei die Größe der Phasenverschiebung eine Funktion der Umdrehungsgeschwindigkeit ist. Sich ändernde Phasenverschiebungen führen zu sich ändernden Interferenzmustern der beiden im Koppler 12 überlagerten Teillichtstrahlen, was sich in unterschiedlichen Intensitäten am Photodetektor 18 widerspiegelt.

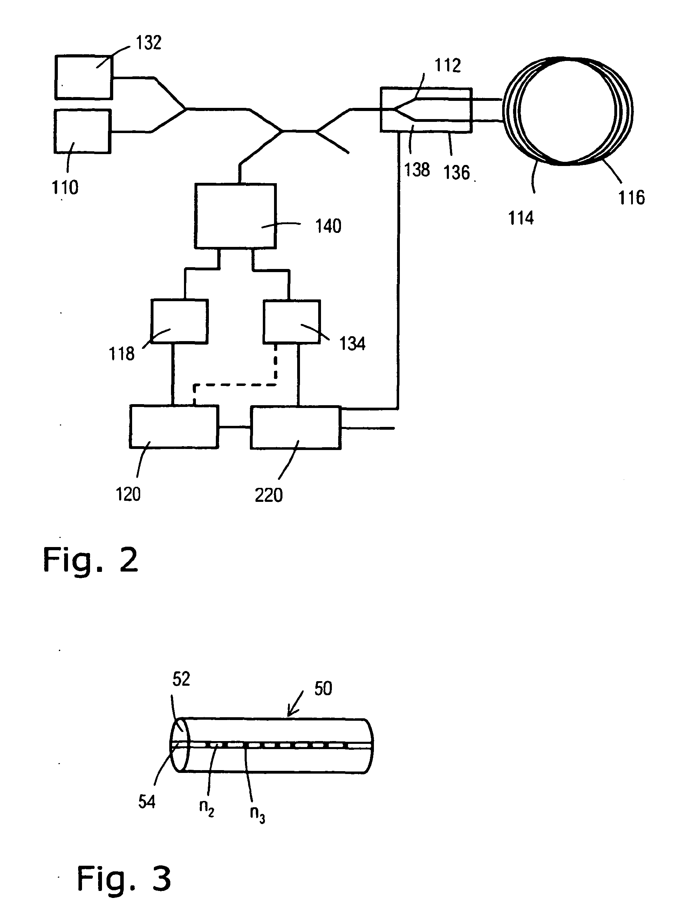

Gemäß der Erfindung ist eine in die Faserspule integrierte Bragg-Struktur vorgesehen, die eine Lichtleitfaser mit periodisch variierendem Brechungsindex umfasst. Eine solche Bragg-Struktur 50 ist schematisch in Figur 3 gezeigt. Die Bragg-Struktur 50 umfaßt eine Lichtleitfaser 52, deren Kern 54 aus einem Material mit einem periodisch modulierten Brechungsindex n₂, n₃ gebildet ist.

Bei dem in der Figur 1 gezeigten Ausführungsbeispiel ist parallel zur Lichtleitfaser 14 des optischen Interferometers eine zusätzliche Lichtleitfaser 30 auf den Träger aufgewickelt und bildet einen Teil der Faserspule 16. Die Lichtleitfaser 52 der Bragg-Struktur 50 bildet einen Abschnitt der zusätzlichen Lichtleitfaser 30, das heißt, dass ein Abschnitt der Lichtleitfaser 30 ein Kernmaterial aufweist, dessen Brechungsindex periodisch variiert. Die Lichtleitfaser 30 ist mit einer zweiten Lichtquelle 32 so gekoppelt, dass das Licht der zweiten Lichtquelle 32 in die Lichtleitfaser 30 eintritt und diese in einer der beiden Richtungen durchläuft. Das die Lichtleitfaser 30 durchlaufene Licht wird einem zweiten Photodetektor 34 beaufschlagt. Das Ausgangssignal des zweiten Photodetektors 34 wird ebenfalls der Signalverarbeitungseinrichtung 20, 22 des faseroptischen Interferometers zugeführt.

Durch den periodisch modulierten Brechungsindex des Kernmaterials in mindestens einem Abschnitt der Lichtleitfaser 30 wird ein Teil des die Lichtleitfaser 30 durchlaufenen Lichtes innerhalb eines schmalen Wellenlängenbereiches reflektiert. Die Reflexionswellenlänge λ_{B}, bei der ein Fiber-Bragg-Grating als Bragg-Struktur 50 reflektierend wirkt, ist durch die Beziehung λ_{B} = 2 n_{eff} A gegeben, wobei n_{eff} die mittlere Brechzahl die Faserkerns und A die Periode der modulierten Struktur ist. Die Gitterperiode A ist eine Funktion der Temperatur und Dehnung der Lichtleitfaser am Ort des Fiber-Bragg-Gratings. Durch die Veränderung der Reflexionswellenlänge λ_{B} lässt sich somit auf Änderungen der Temperatur und/oder der Spannung am Ort des Fiber-Bragg-Gratings schließen. Dazu wird das Licht, das aus der das Fiber-Bragg-Grating enthaltenden Lichtleitfaser austritt, hochaufgelöst spektral analysiert.

Bei der in der Fig. 1 gezeigten Anordnung wird das aus der Lichtleitfaser 30 ausgetretene Licht im zweiten Photodetektor 34 spektral analysiert. Dabei kann entweder der transmittierte Anteil des Fiber-Bragg-Gratings, d.h. der Anteil, der den Wellenlängenbereich des von der zweiten Lichtquelle emittierten Lichts mit Ausnahme der Reflektionswellenlänge λ_{B} des Fiber-Bragg-Gratings enthält, untersucht werden, oder der reflektierte Anteil des Fiber-Bragg-Gratings, der den Wellenlängenbereich der Reflektionswellenlänge λ_{B} beinhaltet. Da die beiden Anteile eine unterschiedliche Laufzeit durch die Lichtleitfaser 30 aufweisen und somit zeitverzögert aus der Lichtleitfaser 30 austreten, lassen sich die beiden Signale getrennt voneinander spektral analysieren. Auf diese Weise kann eine Änderung der Reflexionswellenlänge λ_{B}, bedingt durch Temperaturänderungen und/oder Änderung mechanischer Spannungen am Ort des Fiber-Bragg-Gratings, ermittelt werden. Die im Photodetektor 34 gewonnenen Informationen werden der Signalverarbeitungseinrichtung 20, 22 zugeführt und dort verarbeitet.

Die Informationen über physikalische Zustandsgrößen wie Temperatur und mechanische Spannung im Innern der Faserspule 16 können dazu verwendet werden, die Meßdaten des faseroptischen Interferometers an die ermittelten Zustandsgrößen anzupassen, um eventuelle Verfälschungen des Messsignals durch Änderungen der Temperatur und/oder mechanischer Spannung im Innern der Faserspule zu berücksichtigen. Da die relativen Laufzeiten der Teillichtstrahlen zueinander nicht nur eine Funktion der Umdrehungsgeschwindigkeit sind, sondern auch Temperaturänderungen, Änderung mechanischer Spannungen und/oder Brechzahländerungen zu unterschiedlichen Laufzeiten der beiden Teillichtstrahlen relativ zueinander führen können, müssen Phasenverschiebungen, die durch Änderungen dieser Parameter bedingt sind, bei der Auswertung des Messsignals berücksichtigt werden. Dies kann beispielsweise über eine entsprechende Phasenmodulation eines der gegensinnig laufenden Teillichtstrahlen am Ausgang der Lichtleitfaser 14 geschehen, die eine durch Temperatur- und/oder Änderung mechanischer Spannungen bedingte Laufzeitänderung kompensiert. Dazu ist der Koppler 12 vorzugsweise Bestandteil eines integriert optischen Bauelements 36, der neben dem Koppler 12 einen Phasenmodulator 38 umfaßt.

In der Figur 2 sind der Figur 1 entsprechende technische Merkmale durch gleiche Bezugszeichen, jeweils um 100 erhöht, angegeben. Das in der Fig. 2 gezeigte Ausführungsbeispiel unterscheidet sich von dem in der Fig. 1 gezeigten Ausführungsbeispiel dadurch, dass die Lichtleitfaser 52 der Bragg-Struktur 50 nicht Abschnitte einer separat zu der Lichtleitfaser 14 auf den Träger aufgewickelten Lichtleitfaser 30 bildet, sondern Abschnitte der Lichtleitfaser 114 selbst bildet. In diesem Ausführungsbeispiel durchläuft somit sowohl das von der ersten Lichtquelle 110 als auch das von der zweiten Lichtquelle 132 emittierte Licht eine gemeinsame Lichtleitfaser 114, die abschnittsweise mit mindestens einem Fiber-Bragg-Grating versehen ist. Der Wellenlängenbereich des von der zweiten Lichtquelle 132 emittierten Lichts überlappt nicht mit dem Wellenbereich des von der ersten Lichtquelle 110 emittierten Lichts, damit das von der Faserspule 116 rücklaufende Licht vor dem ersten Photodetektor 118 und dem zweiten Photodetektor 134 spektral selektiert und dem entsprechendem Detektor 118 bzw. 134 zugeordnet werden kann. Zu diesem Zweck ist ein wellenlängenselektives Bauelement 140 wie beispielsweise ein faseroptischer Filter vorgesehen, in dem der vom Koppler 112 kommende Lichtstrahl nach Wellenlängenbereichen getrennt wird. Wie schon im ersten Ausführungsbeispiel wird sowohl das Ausgangssignal des zweiten Photodetektors 134, der zur Auswertung der gegensinnig umlaufenden Teillichtstrahlen und damit zur Bestimmung der Umdrehungsgeschwindigkeit, als auch das Ausgangssignal des ersten Photodetektors 118, der zur Ermittlung physikalischer Zustandsgrößen im Innern der Faser 114 dient, der Signalverarbeitungseinrichtung 120, 122 des faseroptischen Interferometers zugeführt.

Das in der Fig. 1 gezeigte faseroptische Interferometer gemäß einem ersten bevorzugten Ausführungsbeispiel hat den Vorteil, dass durch die getrennte Ausgestaltung der Lichtleitfasern 14, 30 des faseroptischen Interferometers und der Bragg-Struktur der Vorgang zur Bestimmung physikalischer Zustandsgrößen im Innern der Faserspule unabhängig vom Betrieb des faseroptischen Interferometers und damit der eigentlichen Messeinrichtung erfolgt. Bei der in Fig. 1 gezeigten Ausführungsform ist allerdings gegenüber der in der Fig. 2 gezeigten Ausführungsform zusätzlich eine zweite Lichtleitfaser 30 zusammen mit der Interferometerlichleitfaser 14 zur Faserspule 16 aufzuwickeln, was zu erhöhten Herstellungskosten, einem zusätzlichen Platzbedarf und zusätzlichem Gewicht führen kann.

Da nur ein geringer Teil des Lichts an einem Fiber-Bragg-Grating reflektiert wird, lassen sich ohne störende Lichtverluste auch mehrere Fiber-Bragg-Gratings an verschiedenen Orten der Lichtleitfaser 30 bzw. 114 einbringen. Um eine Verzögerung der Laufzeit eines der Teillichtstrahlen gegenüber dem anderen, gegensinnig laufenden Teillichtstrahl durch Brechungsindexänderungen und/oder Änderung mechanischer Spannungen innerhalb der Faser zu erfassen, gibt es keine bevorzugten Orte für die Fiber-Bragg-Gratings in der Lichtleitfaser, da solche nicht-reziproken Laufzeitänderungen grundsätzlich überall in der Faser auftreten können. Um Laufzeitänderungen aufgrund von Kreuzkopplung zu erfassen, werden die Fiber-Bragg-Gratings bevorzugt an den Spulenenden und, in geringerem Maße, in der Spulenmitte vorgesehen, da aufgrund der geringen Kohärenzlänge der Lichtstrahlen nur solche kreuzgekoppelten Lichter einen Einfluss auf das Interferenzsignal der Lichtstrahlen haben die innerhalb ganz bestimmter Orte im optischen Pfad kreuzgekoppelt haben. Die eindeutige Zuordnung der reflektierten bzw. transmittierten Lichter zu den Orten der Fiber-Bragg-Gratings erfolgt durch die sich ergebenden Laufzeitunterschiede der Lichter von diesen räumlich distanzierten Bragg-Strukturen zur optischen Ausleseeinheit 34 bzw. 134.

Das erfindungsgemäße faseroptische Interferometer und das erfindungsgemäße Verfahren ermöglichen somit, auf das faseroptische Interferometer wirkende physikalische Zustandsgrößen während des Betriebs des faseroptischen Interferometers zu ermitteln. Damit ist es möglich, das faseroptische Interferometer nicht nur unter vorher festgelegten Bedingungen zu betreiben, sondern auch auf äußere Einflüsse zu reagieren, die vorab nicht speziell definiert wurden. Das erfindungsgemäße faseroptische Interferometer und das erfindungsgemäße Verfahren ermöglichen ferner, physikalische Zustandsgrößen wie Temperatur und mechanische Spannung sowie deren zeitlichen und örtlichen Veränderungen direkt im Innern der Faserspule zu ermitteln unter Ausnutzung einer bekannten Meßmethode, wodurch sehr genau bestimmt werden kann, in welchem Maß das Messsignal verfälscht wird.

## Patentansprüche

1. Drehratensensor mit einem faseroptischen Interferometer mit einer zu einer Faserspule (16, 116) aufgewickelten Lichtleitfaser (14, 114) mit einem Kernmaterial, in die zwei Teillichtstrahlen einer ersten Lichtquelle (10, 110) einkoppelbar sind, wobei ein Teil des Kernmaterials der Lichtleitfaser (14, 114) als Bragg-Struktur (50) mit periodisch variierenden Brechungsindex ausgebildet ist, wobei das faseroptische Interferometer geeignet ist, Signale auszugeben, aus denen physikalische Zustandsgrößen im Innern der Faserspule ermittelbar sind.

2. Drehratensensor nach Anspruch 1, **dadurch gekennzeichnet, dass** das Interferometer eine zweite Lichtquelle (32) aufweist, die so angeordnet ist, dass ein von ihr emittierter Lichtstrahl in die Lichtleitfaser (52) der Bragg-Struktur (50) mit periodisch variierendem Brechungsindex einkoppelbar ist.

3. Drehratensensor nach einem der Ansprüche 1 oder 2, **dadurch gekennzeichnet, dass** das Interferometer einen Strahlteiler (12, 112) aufweist, mittels dem ein in den Strahlteiler eingekoppelter Lichtstrahl in zwei Teillichtstrahlen aufteilbar ist, und der so angeordnet ist, dass die zwei Teillichtstrahlen jeweils in ein Ende der Lichtleitfaser (14, 114) einkoppelbar sind.

4. Drehratensensor nach einem der vorhergehenden Ansprüche, **dadurch gekennzeichnet, dass** das Interferometer einen Koppler (12, 112) aufweist, mittels dem die zwei aus der Lichtleitfaser (14, 114) austretenden Teillichtstrahlen zu einem Lichtstrahl überlagerbar sind.

5. Drehratensensor nach einem der vorhergehenden Ansprüche, **dadurch gekennzeichnet, dass** die Lichtleitfaser (52) mit periodisch variierendem Brechungsindex einen Abschnitt einer weiteren Lichtleitfaser (30) bildet, die parallel zur Lichtleitfaser (14), in die die zwei Teillichtstrahlen der ersten Lichtquelle (10) ein koppelbar sind, zur Faserspule (16) aufgewickelt ist.

6. Drehratensensor nach einem der Ansprüche 1 bis 4, **dadurch gekennzeichnet, dass** die Lichtleitfaser (52) mit periodisch variierendem Brechungsindex einen Abschnitt der Lichtleitfaser (114) bildet, in die die zwei Teillichtstrahlen der ersten Lichtquelle (110) einkoppelbar sind.

7. Drehratensensor nach einem der Anspruch 6, **dadurch gekennzeichnet, dass** der Wellenlängenbereich des von der zweiten Lichtquelle (132) emittierten Lichts nicht mit dem Wellenlängenbereich des von der ersten Lichtquelle (110) emittierten Lichts überlappt.

8. Drehratensensor nach Anspruch 6 oder 7, **dadurch gekennzeichnet, dass** eine wellenlängenselektive Vorrichtung (140) vorgesehen ist, die so mit der Lichtleitfaser (114) gekoppelt ist, dass das aus der Lichtleitfaser (114) austretende Licht in einzelne Wellenlängenbereiche zerlegt werden kann.

9. Drehratensensor nach einem der vorhergehenden Ansprüche, **dadurch gekennzeichnet, dass** das Interferometer einen Photodetektor (34, 134) umfasst, der so angeordnet ist, dass ein die Lichtleitfaser (30, 114) mit periodisch variierendem Brechungsindex durchlaufener Lichtstrahl von ihr erfasst wird.

10. Drehratensensor nach Anspruch 9, **dadurch gekennzeichnet, dass** der Photodetektor (34, 134) mit einer Auswerteeinheit (20, 22, 120. 122) gekoppelt ist, mittels der anhand der Reflektions- und/ oder Durchlasswellenlänge der Bragg-Struktur physikalische Zustandsgrößen im Innern der Faserspule (16, 116) ermittelbar sind.

11. Drehratensensor nach einem der vorhergehenden Ansprüche, **dadurch gekennzeichnet, dass** das Interferometer ferner einen Koppler (12), in dem die beiden Teillichtstrahlen überlagert werden, und zusätzlich ein Element (38) zur Kompensation einer durch eine Änderung der physikalischen Zustandsgröße bedingten Laufzeitänderung umfasst.

12. Verfahren zur Ermittlung der Drehrate, bei dem zwei Teillichtstrahlen in eine zu einer Faserspule (16, 116) eines faseroptischen Interferometers aufgewickelten Lichtleitfaser (14, 114) eingekoppelt werden, **dadurch gekennzeichnet, dass** anhand der Reflektions- und/ oder Durchlasswellenlänge einer als Teil der Lichtleitfaser (52) ausgebildeten Bragg-Struktur (50), mit periodisch variierendem Brechungsindex, zusätzlich Informationen über physikalische Zustandsgrößen im Innern der Faserspule (16, 116) gewonnen werden.

13. Verfahren nach Anspruch 11, **dadurch gekennzeichnet, dass** sowohl das von einer ersten Lichtquelle (110) emittierte Licht als auch das von einer zweiten Lichtquelle (132) emittierte Licht in eine zur Faserspule (116) aufgewickelten Lichtleitfaser (114) eingekoppelt werden, wobei mindestens ein Abschnitt der Lichtleitfaser (114) die Bragg-Struktur (50) mit periodisch variierendem Brechungsindex bildet.

14. Verfahren nach Anspruch 12, **dadurch gekennzeichnet, dass** der Wellenlängenbereich des von der zweiten Lichtquelle (132) emittierten Lichts nicht mit dem Wellenlängenbereich des von der ersten Lichtquelle (110) emittierten Lichts überlappt.

15. Verfahren nach Anspruch 11, **dadurch gekennzeichnet, dass** das von einer ersten Lichtquelle (10) emittierte Licht in eine erste Lichtleitfaser (14) eingekoppelt wird, und dass das von einer zweiten Lichtquelle (32) emittierte Licht in eine zweite Lichtleitfaser (30) eingekoppelt wird, wobei die zweite Lichtleitfaser (30) parallel zur ersten Lichtleitfaser (14) zur Faserspule (16) aufgewickelt ist, und wobei die Lichtleitfaser (52) mit periodisch variierendem Brechungsindex einen Abschnitt der zweiten Lichtleitfaser (30) bildet.

16. Verfahren nach einem der Ansprüche 11 bis 14, **dadurch gekennzeichnet, dass** abhängig von den gewonnenen Informationen über physikalische Zustandsgrößen im Innern der Faserspule (16, 116) ein Phasenmodulator (38, 138) angesteuert wird, der geeignet ist, die Phase eines Lichtstrahls, der eine zur Faserspule (16. 116) aufgewickelte Lichtleitfaser (14, 114) durchlaufen hat, zu modulieren.

17. Verfahren nach einem der Ansprüche 11 bis 15, **dadurch gekennzeichnet, dass** die Informationen über physikalische Zustandsgrößen im Innern der Faserspule (16. 116) die Temperatur und die Spannung im Bereich der Lichtleitfaser (52) mit periodisch variierendem Brechungsindex und deren zeitabhängigen und ortsabhängigen Änderungen umfassen.

18. Verfahren nach einem der Ansprüche 12 bis 17, **dadurch gekennzeichnet, dass** die beiden Teillichtstrahlen überlagert werden und eine durch eine Änderung der physikalischen Zustandsgröße bedingte Laufzeitänderung der Teillichtstrahlen kompensiert wird.

## Claims

1. A rate of rotation sensor comprising a fiber optic interferometer comprising an optical fiber (14, 114) comprising a core material, which is wound to form a fiber coil (16, 116) and into which two partial light beams of a first light source (10, 110) can be coupled, wherein a part of the core material of the optical fiber (14, 114) is embodied as a Bragg structure (50) having a periodically varying refractive index, wherein the fiber optic interferometer is suitable for outputting signals from which physical state parameters in the interior of the fiber coil can be determined.

2. The rate of rotation sensor as claimed in claim 1, **characterized in that** the interferometer has a second light source (32) which is arranged in such a way that a light beam emitted by it can be coupled into the optical fiber (52) of the Bragg structure (50) having a periodically varying refractive index.

3. The rate of rotation sensor as claimed in either of claims 1 and 2, **characterized in that** the interferometer has a beam splitter (12, 112), by means of which a light beam coupled into the beam splitter can be split into two partial light beams and which is arranged in such a way that the two partial light beams can respectively be coupled into an end of the optical fiber (14, 114) .

4. The rate of rotation sensor as claimed in any of the preceding claims, **characterized in that** the interferometer has a coupler (12, 112), by means of which the two partial light beams emerging from the optical fiber (14, 114) can be superimposed to form a light beam.

5. The rate of rotation sensor as claimed in any of the preceding claims, **characterized in that** the optical fiber (52) having a periodically varying refractive index forms a section of a further optical fiber (30), which is wound in parallel fashion with respect to the optical fiber (14) into which the two partial light beams of the first light source (10) can be coupled, to form the fiber coil (16).

6. The rate of rotation sensor as claimed in any of claims 1 to 4, **characterized in that** the optical fiber (52) having a periodically varying refractive index forms a section of the optical fiber (114) into which the two partial light beams of the first light source (110) can be coupled.

7. The rate of rotation sensor as claimed in claim 6, **characterized in that** the wavelength range of the light emitted by the second light source (132) does not overlap the wavelength range of the light emitted by the first light source (110).

8. The rate of rotation sensor as claimed in claim 6 or 7, **characterized in that** a wavelength-selective device (140) is provided, which is coupled to the optical fiber (114) in such a way that the light emerging from the optical fiber (114) can be decomposed into individual wavelength ranges.

9. The rate of rotation sensor as claimed in any of the preceding claims, **characterized in that** the interferometer comprises a photodetector (34, 134), which is arranged in such a way that a light beam that has passed through the optical fiber (30, 114) having a periodically varying refractive index is detected by it.

10. The rate of rotation sensor as claimed in claim 9, **characterized in that** the photodetector (34, 134) is coupled to an evaluation unit (20, 22, 120, 122), by means of which physical state parameters in the interior of the fiber coil (16, 116) can be determined on the basis of the reflection and/or transmission wavelength of the Bragg structure.

11. The rate of rotation sensor as claimed in any of the preceding claims, **characterized in that** the interferometer furthermore comprises a coupler (12), in which the two partial light beams are superimposed, and additionally an element (38) for compensation of a propagation time change brought about by a change in the physical state parameter.

12. A method for determining the rate of rotation, in which two partial light beams are coupled into an optical fiber (14, 114) wound to form a fiber coil (16, 116) of a fiber optic interferometer **characterized in that** information about physical state parameters in the interior of the fiber coil (16, 116) is additionally obtained on the basis of the reflection and/or transmission wavelength of a Bragg structure (50) embodied as part of the optical fiber (52) having a periodically varying refractive index.

13. The method as claimed in claim 11, **characterized in that** both the light emitted by a first light source (110) and the light emitted by a second light source (132) are coupled into an optical fiber (114) wound to form the fiber coil (116), wherein at least one section of the optical fiber (114) forms the Bragg structure (50) having a periodically varying refractive index.

14. The method as claimed in claim 12, **characterized in that** the wavelength range of the light emitted by the second light source (132) does not overlap the wavelength range of the light emitted by the first light source (110).

15. The method as claimed in claim 11, **characterized in that** the light emitted by a first light source (10) is coupled into a first optical fiber (14), and **in that** the light emitted by a second light source (32) is coupled into a second optical fiber (30), wherein the second optical fiber (30) is wound in parallel fashion with respect to the first optical fiber (14) to form the fiber coil (16), and wherein the optical fiber (52) having a periodically varying refractive index forms a section of the second optical fiber (30).

16. The method as claimed in any of claims 11 to 14, **characterized in that** a phase modulator (38, 138) is driven depending on the information obtained about physical state parameters in the interior of the fiber coil (16, 116), which phase modulator is suitable for modulating the phase of a light beam that has passed through an optical fiber (14, 114) wound to form the fiber coil (16, 116).

17. The method as claimed in any of claims 11 to 15, **characterized in that** the information about physical state parameters in the interior of the fiber coil (16, 116) comprises the temperature and the stress in the region of the optical fiber (52) having a periodically varying refractive index and the time-dependent and location-dependent changes thereof.

18. The method as claimed in any of claims 12 to 17, **characterized in that** the two partial light beams are superimposed and a propagation time change of the partial light beams that is brought about by a change in the physical state parameter is compensated for.

## Revendications

1. Capteur de vitesse de rotation avec un interféromètre à fibre optique avec une fibre optique (14, 114) enroulée pour former une bobine de fibre (16, 116) et présentant un matériau central dans lequel sont aptes à être introduits deux rayons de lumière partiels d'une première source de lumière (10, 110), étant précisé qu'une partie du matériau central de la fibre optique (14, 114) est conçue comme une structure de Bragg (50) à indice de réfraction qui varie périodiquement, et que l'interféromètre à fibre optique est apte à émettre des signaux à partir desquels peuvent être déterminées des grandeurs d'état physiques à l'intérieur de la bobine de fibre.

2. Capteur de vitesse de rotation selon la revendication 1, **caractérisé en ce que** l'interféromètre comporte une seconde source de lumière (32), qui est disposée de telle sorte qu'un rayon de lumière qu'elle émet soit apte à être introduit dans la fibre optique (52) de la structure de Bragg (50) à indice de réfraction qui varie périodiquement.

3. Capteur de vitesse de rotation selon l'une des revendications 1 ou 2, **caractérisé en ce que** l'interféromètre comporte un séparateur de rayon (12, 112) à l'aide duquel un rayon de lumière introduit dans le séparateur de rayon est apte à être divisé en deux rayons de lumière partiels, et qui est disposé de telle sorte que les deux rayons de lumière partiels puissent être introduits chacun dans une extrémité de la fibre optique (14, 114).

4. Capteur de vitesse de rotation selon l'une des revendications précédentes, **caractérisé en ce que** l'interféromètre comporte un coupleur (12, 112) à l'aide duquel les deux rayons de lumière partiels qui sortent de la fibre optique (14, 114) sont aptes à être superposés en un rayon de lumière.

5. Capteur de vitesse de rotation selon l'une des revendications précédentes, **caractérisé en ce que** la fibre optique (52) à indice de réfraction qui varie périodiquement forme un tronçon d'une autre fibre optique (30) qui est enroulée, parallèlement à la fibre optique (14) dans laquelle les deux rayons de lumière partiels de la première source de lumière (10) sont aptes à être introduits, pour former la bobine de fibre (16).

6. Capteur de vitesse de rotation selon l'une des revendications 1 à 4, **caractérisé en ce que** la fibre optique (52) à indice de réfraction qui varie périodiquement forme un tronçon de la fibre optique (114) dans laquelle les deux rayons de lumière partiels de la première source de lumière (110) sont aptes à être introduits.

7. Capteur de vitesse de rotation selon la revendication 6, **caractérisé en ce que** la gamme de longueurs d'onde de la lumière émise par la seconde source de lumière (132) ne recouvre pas la gamme de longueurs d'onde de la lumière émise par la première source de lumière (110).

8. Capteur de vitesse de rotation selon la revendication 6 ou 7, **caractérisé en ce qu'**il est prévu un dispositif à sélection de longueur d'onde (140) qui est couplé à la fibre optique (114) de telle sorte que la lumière qui sort de celle-ci puisse être décomposée en gammes individuelles de longueurs d'onde.

9. Capteur de vitesse de rotation selon l'une des revendications précédentes, **caractérisé en ce que** l'interféromètre comprend un photodétecteur (34, 134) qui est disposé de manière à détecter un rayon de lumière qui traverse la fibre optique (30, 114) à indice de réfraction qui varie périodiquement.

10. Capteur de vitesse de rotation selon la revendication 9, **caractérisé en ce que** le photodétecteur (34, 134) est couplé à une unité d'évaluation (20, 22, 120, 122) grâce à laquelle des grandeurs d'état physiques à l'intérieur de la bobine de fibre (16, 116) sont aptes à être déterminées à l'aide de la longueur d'onde de réflexion et/ou de passage de la structure de Bragg.

11. Capteur de vitesse de rotation selon l'une des revendications précédentes, **caractérisé en ce que** l'interféromètre comprend par ailleurs un coupleur (12) dans lequel les deux rayons de lumière partiels sont superposés, et en supplément un élément (38) pour compenser une variation de temps de propagation due à une variation de la grandeur d'état physique.

12. Procédé pour déterminer la vitesse de rotation, selon lequel deux rayons lumineux sont introduits dans une fibre optique (14, 114) enroulée pour former une bobine de fibre (16, 116) d'un interféromètre à fibre optique, **caractérisé en ce qu'**à l'aide de la longueur d'onde de réflexion et/ou de passage d'une structure de Bragg (50) conçue comme une partie de la fibre optique (52) et présentant un indice de réfraction qui varie périodiquement, des informations sont obtenues en supplément sur des grandeurs d'état physiques à l'intérieur de la bobine de fibre (16, 116).

13. Procédé selon la revendication 11, **caractérisé en ce que** la lumière émise par une première source de lumière (110) et la lumière émise par une seconde source de lumière (132) sont toutes les deux introduites dans une fibre optique (111) enroulée pour former la bobine de fibre (116), étant précisé qu'au moins un tronçon de la fibre optique (114) forme la structure de Bragg (50) à indice de réfraction qui varie périodiquement.

14. Procédé selon la revendication 12, **caractérisé en ce que** la gamme de longueurs d'onde de la lumière émise par la seconde source de lumière (132) ne recouvre pas la gamme de longueurs d'onde de la lumière émise par la première source de lumière (110).

15. Procédé selon la revendication 11, **caractérisé en ce que** la lumière émise par une première source de lumière (10) est introduite dans une première fibre optique (14) et **en ce que** la lumière émise par une seconde source de lumière (32) est introduite dans une seconde fibre optique (30), étant précisé que la seconde fibre optique (30) est enroulée, parallèlement à la première fibre optique (14), pour former la bobine de fibre (16), et que la fibre optique (52) à indice de réfraction qui varie périodiquement forme un tronçon de la seconde fibre optique (30).

16. Procédé selon l'une des revendications 11 à 14, **caractérisé en ce qu'**en fonction des informations obtenues sur des grandeurs d'état physiques à l'intérieur de la bobine de fibre (16, 116) est commandé un modulateur de phase (38, 138) qui est apte à moduler la phase d'un rayon de lumière qui a traversé une fibre optique (14, 114) enroulée pour former la bobine de fibre (16, 116).

17. Procédé selon l'une des revendications 11 à 15, **caractérisé en ce que** les informations sur les grandeurs d'état physiques à l'intérieur de la bobine de fibre (16, 116) comprennent la température et la tension dans la zone de la fibre optique (52) à indice de réfraction qui varie périodiquement, et leurs variations dans le temps et dans l'espace.

18. Procédé selon l'une des revendications 12 à 17, **caractérisé en ce que** les deux rayons de lumière partiels sont superposés, et une variation de temps de propagation due à une variation de la grandeur d'état physique est compensée.
